# EUROPEAN PATENT APPLICATION

(11) **EP 4 299 843 A1**
(43) Date of publication of application: **03.01.2024**
(21) Application number: 22759312.6
(22) Date of filing: 02.02.2022
(51) Int. Cl.: E02F 9/20, E02F 9/26

(54) **ELECTRIC WORK MACHINE**

(30) Priority: 24.02.2021 JP 2021027584
(71) Applicant: Yanmar Holdings Co., Ltd., Osaka-shi, Osaka, 530-0013 (JP)
(72) Inventor: KANEDA, Kensuke, Osaka-shi, Osaka 530-0013 (JP); ONITSUKA, Kosuke, Chikugo-shi, Fukuoka 833-0055 (JP)
(74) Representative: Dennemeyer & Associates S.A.
(86) International application number: PCT/JP2022/004038
(87) International publication number: WO 2022/181271

(57) **Abstract**

Provided is a hydraulic shovel as an electric work machine, the hydraulic shovel comprising: a charger that supplies electric power from an external power source to a battery to charge the battery; an electric motor that is driven with electric power supplied from the battery; a hydraulic system including a hydraulic pump driven by the electric motor and a hydraulic actuator to which pressure oil is supplied by the hydraulic pump; a control unit that manages a physical quantity indicating the operation status of the electric motor as first operation information, and manages a physical quantity indicating the operation status of the battery including charging and discharging as second operation information; and an output unit that outputs the first operation information and the second operation information.

## Description

### TECHNICAL FIELD

The present invention relates to an electric work machine.

### BACKGROUND ART

Conventionally, maintenance timing notification devices for construction machines have been disclosed. For example, a notification device in Patent Document 1 notifies an operator or a manager that an actual operation time of an engine reaches a maintenance timing for each maintenance item.

### CITATION LIST

### Patent Literature

Patent Literature 1: Japanese Patent Unexamined Application Publication No. 2007-262806

### DISCLOSURE OF INVENTION

### PROBLEMS TO BE SOLVED BY THE INVENTION

In recent years, in addition to hydraulic excavators that use engine power to drive hydraulic actuators, many hydraulic excavators (electric excavators) that use battery power to drive hydraulic actuators are also being utilized. In an electric excavator, the electric motor is driven by battery power to rotate a hydraulic pump, thereby supplying pressure oil to the hydraulic actuator to drive the hydraulic actuator.

In an electric excavator, the hydraulic pump is driven by an electric motor as described above, so an operation time of the electric motor can be regarded as an operation time of the hydraulic pump. Therefore, by managing the operation time of the electric motor, the timing of maintenance of the hydraulic system including the hydraulic pump can be managed, thereby enabling maintenance of the hydraulic system to be performed at an appropriate timing.

On the other hand, batteries deteriorate not only during discharge, that is, while the electric motor is operating, but also during charging. Therefore, for the battery, if the timing of maintenance is managed based on the operation time of the electric motor, as in the case of the hydraulic system, it is not possible to perform maintenance at an appropriate timing that also takes into account the deterioration of the battery during charging.

The present invention was made to solve the above problem, the purpose of which is to provide an electric work machine that enables maintenance of the hydraulic system and the battery to be performed at appropriate timings, respectively.

### MEANS FOR SOLVING THE PROBLEMS

An electric work machine according to one aspect of the present invention includes a charger that charges a battery by supplying electric power from an external power source to the battery, an electric motor that is driven by electric power supplied from the battery, a hydraulic system that includes a hydraulic pump driven by the electric motor and a hydraulic actuator to which pressure oil is supplied by the hydraulic pump, a control unit that manages a physical quantity indicating an operation state of the electric motor as first operation information, and manages a physical quantity indicating an operation state including charging and discharging of the battery as second operation information, and an output unit that outputs the first operation information and the second operation information.

### EFFECT OF THE INVENTION

According to the above configuration, maintenance of the hydraulic system and the battery can be performed at appropriate timings respectively.

### BRIEF DESCRIPTION OF DRAWINGS

FIG. 1 is a side view of a schematic configuration of a hydraulic excavator which is an example of an electric work machine according to an embodiment of the present invention.
FIG. 2 is a block diagram schematically illustrating a configuration of control and hydraulic systems of the hydraulic excavator.
FIG. 3 is an explanatory diagram illustrating an example of a display on a display unit of the hydraulic excavator.
FIG. 4 is an explanatory diagram illustrating another example of a display of the display unit.
FIG. 5 is an explanatory diagram schematically illustrating an example of a relay energization state, electric motor operation state, charger operation state, and battery operation state in each of a charging mode and a battery mode.
FIG. 6 is an explanatory diagram schematically illustrating an example of a relay energization state, electric motor operation state, charger operation state, and battery operation state in each of the charging mode, the battery mode, and a combined power source mode.

### DESCRIPTION OF EMBODIMENTS

An embodiment of the present invention will be described as follows with reference to the accompanying drawings.

### [1. Electric Work Machine]

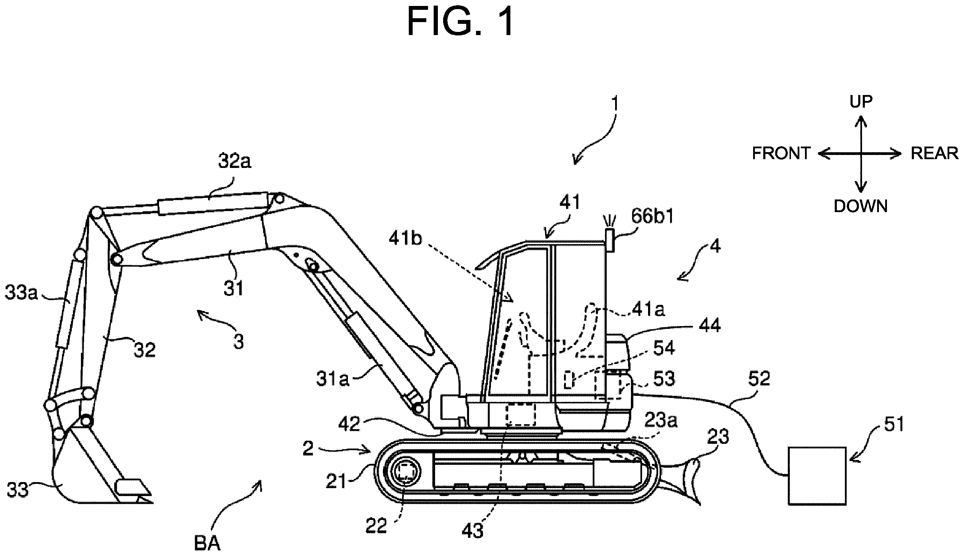

FIG. 1 is a side view of a schematic configuration of a hydraulic excavator 1, which constitutes an electric excavator, as an example of an electric work machine according to the present embodiment. The hydraulic excavator 1 includes a lower traveling body 2, a work machine 3, and an upper swivel body 4.

Herein, in FIG. 1, directions are defined as follows. First, a direction in which the lower traveling body 2 travels straight ahead is defined as a front-rear direction, one side in the front-rear direction is defined as "front", and another side in the front-rear direction is defined as "rear". In FIG. 1, a traveling motor 22 side relative to a blade 23 is illustrated as "front", as an example. A transverse direction perpendicular to the front-rear direction is defined as a left-right direction. In this case, a left side and a right side as viewed from an operator (manipulator, driver) seated on an operator's seat 41a are defined as "left" and "right" respectively. Further, a gravity direction perpendicular to the front-rear direction and the left-right direction is defined as an up-down direction, with an upstream side of the gravity direction defined as "up" and a downstream side defined as "down".

The lower traveling body 2 includes a pair of left and right crawlers 21 and a pair of left and right traveling motors 22. Each of the traveling motors 22 is a hydraulic motor. The left and right traveling motors 22 drive the left and right crawlers 21, respectively, to move the hydraulic excavator 1 forward and backward. The lower traveling body 2 is provided with the blade 23 for performing a ground leveling work and a blade cylinder 23a. The blade cylinder 23a is a hydraulic cylinder that turns the blade 23 in the up-down direction.

The work machine 3 includes a boom 31, an arm 32, and a bucket 33. The boom 31, the arm 32, and the bucket 33 can be independently driven to perform excavation work of earth, sand, etc.

The boom 31 is turned by a boom cylinder 31a. The boom cylinder 31a has a base end portion thereof supported by a front portion of the upper swivel body 4, and is freely movable in an extendable and retractable manner. The arm 32 is turned by an arm cylinder 32a. The arm cylinder 32a has a base end portion thereof supported by a tip portion of the boom 31, and is freely movable in an extendable and retractable manner. The bucket 33 is turned by a bucket cylinder 33a. The bucket cylinder 33a has a base end portion thereof supported by a tip portion of the arm 32, and is freely movable in an extendable and retractable manner. Each of the boom cylinder 31a, the arm cylinder 32a, and the bucket cylinder 33a includes a hydraulic cylinder.

The upper swivel body 4 is configured to be swivelable relative to the lower traveling body 2 via a swivel bearing (not illustrated). In the upper swivel body 4, a steering part 41, a swivel base 42, a swivel motor 43, an engine room 44, and the like are placed. Being driven with the swivel motor 43 as a hydraulic motor, the upper swivel body 4 swivels via the swivel bearing.

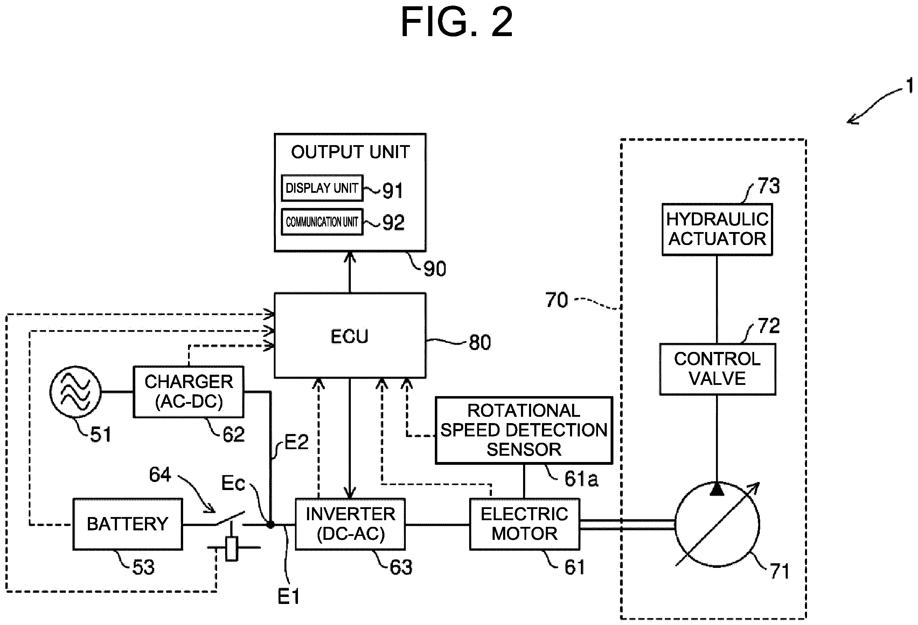

A plurality of hydraulic pumps 71 (see FIG. 2) is placed in the upper swivel body 4. Each of the hydraulic pumps 71 is driven by an electric motor 61 (see FIG. 2) inside the engine room 44. Each of the hydraulic pumps 71 supplies hydraulic oil (pressure oil) to the hydraulic motors (e.g., the left and right traveling motors 22 and the swivel motor 43) and the hydraulic cylinders (e.g., the blade cylinder 23a, the boom cylinder 31a, the arm cylinder 32a, the bucket cylinder 33a). The hydraulic motors and hydraulic cylinders that are driven with the hydraulic oil supplied from any of the hydraulic pumps 71 are collectively referred to as a hydraulic actuator 73 (see FIG. 2).

The operator's seat 41a is placed in the steering part 41. Various levers 41b are placed around the operator's seat 41a. The operator sits on the operator's seat 41a and operates the levers 41b, thereby to drive the hydraulic actuator 73. This enables the lower traveling body 2 to travel, the blade 23 to perform the ground leveling work, the work machine 3 to perform the excavation work, and the upper swivel body 4 to swivel, etc.

A battery 53 is mounted on the upper swivel body 4. The battery 53 includes a lithium-ion battery that outputs high voltage, for example, and is used to drive the electric motor 61. Further, the upper swivel body 4 is provided with a power feed port, which is not illustrated in the figure. The above power feed port and an external power source 51 are connected via a power feed cable 52. This also allows the battery 53 to be charged.

Further, when the lower traveling body 2, the work machine 3, and the upper swivel body 4 are collectively defined as a machine body BA, the machine body BA may be driven by a combination of power-driven equipment and hydraulic equipment. That is, the machine body BA may include an electric traveling motor, an electric cylinder, an electric swivel motor, etc., other than the hydraulic equipment such as the hydraulic actuators 73.

### [2. Configuration of Control and Hydraulic Systems]

FIG. 2 is a block diagram schematically illustrating a configuration of control and hydraulic systems of the hydraulic excavator 1. In FIG. 2, arrows shown in dashed lines indicate transmission paths of detection signals. In addition, arrows shown in solid lines indicate transmission paths of control signals (commands). The hydraulic excavator 1 includes the electric motor 61. The electric motor 61 is driven by electric power supplied from the battery 53.

Rotational speed of the electric motor 61 is detected by a rotational speed detection sensor 61a. In other words, the hydraulic excavator 1 includes the rotational speed detection sensor 61a that detects the rotational speed of the electric motor 61. The information on the rotational speed of the electric motor 61 detected by the rotational speed detection sensor 61a is input to an ECU 80, which is described later.

The hydraulic excavator 1 includes a charger 62. The charger 62 converts an AC voltage supplied from the external power source 51 via the power feed cable 52 (see FIG. 1) into a DC voltage. The DC voltage (electric power) output from the charger 62 is supplied to the battery 53. The electric power is supplied from the external power source 51 to the battery 53 via the charger 62, thereby charging the battery 53. In other words, the hydraulic excavator 1 includes the charger 62 that charges the battery 53 by supplying electric power from the external power source 51 to the battery 53.

The hydraulic excavator 1 includes an inverter 63. The inverter 63 converts a DC voltage supplied from the battery 53 into an AC voltage and supplies the AC voltage to the electric motor 61. As a result, the electric motor 61 is rotated. The supply of the AC voltage (current) from the inverter 63 to the electric motor 61 is performed based on a rotation command (control signal) output from the ECU 80.

The electric power supplied from the battery 53 to the electric motor 61 passes through a first electric path E1. The inverter 63 described above is located between the battery 53 and the electric motor 61 in the first electric path E1. In addition, the electric power supplied from the charger 62 to the battery 53 passes through a second electric path E2. The second electric path E2 merges with the first electric path E1 at a merging portion Ec located between the battery 53 and the inverter 63. Therefore, the electric power output from the charger 62 is supplied to the battery 53 via the second electric path E2 and the merging portion Ec. In other words, the hydraulic excavator 1 includes the first electric path E1 that supplies electric power from the battery 53 to the electric motor 61, and the second electric path E2 that is connected to the charger 62 and merges with the first electric path E1 at the merging portion Ec.

The hydraulic excavator 1 also includes a relay 64. In the first electric path E1, the relay 64 is located between the merging portion Ec and the battery 53. The relay 64 switches the first electric path E1 between a connected state (in which the battery 53 and the inverter 63 are electrically connected) and a disconnected state (in which the battery 53 and the inverter 63 are electrically disconnected) based on the control of the ECU 80. In addition, the relay 64 detects the connected state or the disconnected state and outputs the detection signal to the ECU 80. Thus, the ECU 80 can manage a connection time or a disconnection time of the relay 64 based on the detection signal.

The hydraulic excavator 1 also includes a hydraulic system 70. The hydraulic system 70 includes the hydraulic pump 71, a control valve 72, and the hydraulic actuator 73.

The hydraulic pump 71 is connected to a rotary shaft (output shaft) of the electric motor 61 and is driven by the rotation of the electric motor 61. The hydraulic pump 71 is, for example, a variable displacement pump, but may be a fixed displacement pump. Although a plurality of the hydraulic pumps 71 are provided as described above, only one hydraulic pump 71 is illustrated as an example in FIG. 2. The hydraulic pump 71 supplies hydraulic oil in a hydraulic oil tank (not shown) as pressure oil to the hydraulic actuator 73 via the control valve 72. As a result, the hydraulic actuator 73 is driven. The control valve 72 is a direction switching valve that controls the flow direction and flowrate of the pressure oil supplied from the hydraulic pump 71 to hydraulic actuators 73, and is provided for each of the hydraulic actuators 73.

As described above, the hydraulic excavator 1 includes the hydraulic system 70 including the hydraulic pump 71 driven by the electric motor 61 and the hydraulic actuator 73 to which the pressure oil is supplied by the hydraulic pump 71.

The hydraulic excavator 1 further includes an Electronic Control Unit (ECU) 80. The ECU 80 is a control unit that controls each part of the hydraulic excavator 1, and includes, for example, a Central Processing Unit (CPU), a storage unit, and the like. The ECU 80 generates a rotation command for the electric motor 61 and supplies the rotation command to the inverter 63.

In addition, detection signals from various parts of the hydraulic excavator 1 are input to the ECU 80. For example, the electric motor 61, the charger 62, the inverter 63, and the battery 53 each have built-in sensors (not shown) that detect the operation states of themselves, including the presence or absence of abnormalities, and the detection signals from these sensors are input to the ECU 80. Thus, the ECU 80 can recognize the operation states of the electric motor 61, the charger 62, the inverter 63, and the battery 53, respectively, based on the above detection signals.

For example, the ECU 80 can recognize a time during which the electric motor 61 is driven as an operation time of the electric motor 61 based on the detection signals from the sensors built into the electric motor 61. The ECU 80 can also recognize a time during which the charger 62 is in operation (e.g., a charging time of the battery 53) based on the detection signals from the sensors built into the charger 62. In addition, the ECU 80 can recognize a time during which the battery 53 is in operation (e.g., the charging time and a discharging time of the battery 53) based on the detection signals from the sensors built into the battery 53, and can also recognize a residual capacity (charge amount) of the battery 53.

The ECU 80 stores and manages first operation information and second operation information in the storage unit in the ECU 80. The first operation information is information on a physical quantity indicating the operation state of the electric motor 61, and includes, for example, the operation time of the electric motor 61 as described above. The first operation information may include information on the rotational speed of the electric motor 61 detected by the rotational speed detection sensor 61a. On the other hand, the second operation information is information on a physical quantity indicating the operation state of the battery 53, and includes, for example, the operation time (charging time + discharging time) of the battery 53 as described above. The second operation information may include the residual capacity of the battery 53.

As described above, the hydraulic excavator 1 includes the ECU 80 as a control unit that manages the physical quantity indicating the operation state of the electric motor 61 as the first operation information based on an output signal of the electric motor 61 and manages the physical quantity indicating the operation state including charging and discharging of the battery 53 as the second operation information based on an output signal of the battery 53.

The hydraulic excavator 1 further includes an output unit 90. The output unit 90 outputs the first operation information and the second operation information managed by the ECU 80. The output unit 90 includes a display unit 91 and a communication unit 92.

The display unit 91 includes a liquid crystal display, for example, and displays the first operation information and the second operation information under the control of the ECU 80. That is, the output unit 90 includes the display unit 91 that displays the first operation information and the second operation information. The communication unit 92 is an interface for communicating with an external terminal and includes an antenna, a transmission/reception circuit, and the like.

Although not shown in the figure, the hydraulic excavator 1 is provided with a hydraulic oil temperature sensor for detecting the temperature of the hydraulic oil, and a cooling water temperature sensor for detecting the temperature of the cooling water flowing through a cooling system for cooling the electric motor 61 and the like.

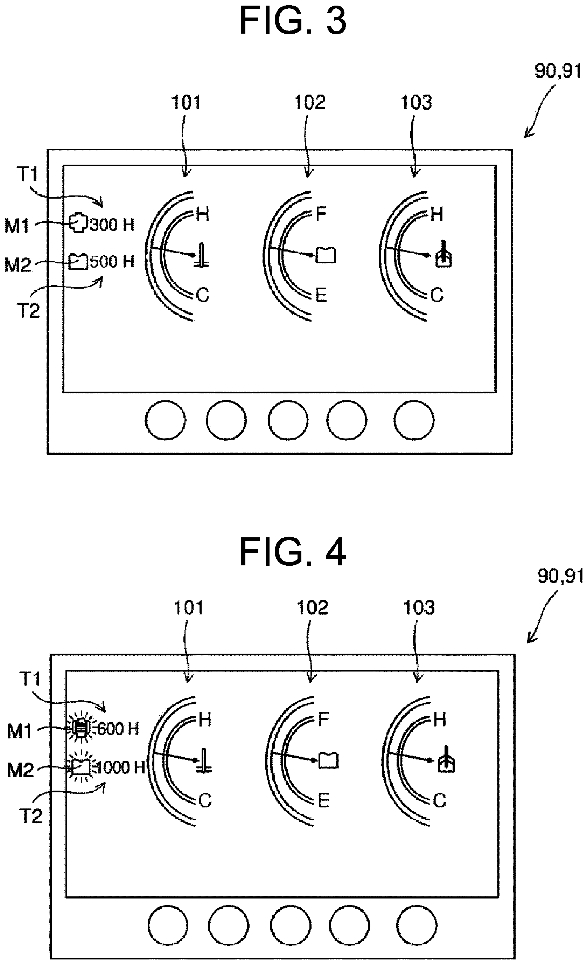

FIG. 3 illustrates an example of a display on the display unit 91. As shown in the figure, the display unit 91 displays each of the following information 101 to 103: the temperature of the hydraulic oil detected by the hydraulic oil temperature sensor, the residual capacity of the battery 53, and the temperature of the cooling water detected by the cooling water temperature sensor, respectively. In addition, the display unit 91 displays an operation time T1 of the electric motor 61 as the first operation information, together with an icon M1 indicating the electric motor 61, and an operation time T2 of the battery 53 as the second operation information, together with an icon M2 indicating the battery 53. The example in the figure illustrates that the operation time T1 is "300H" and the operation time T2 is "500H". Note that "H" indicates time (Hour) (the same applies hereinafter).

As in the present embodiment, the ECU 80 manages the physical quantity indicating the operation state of the electric motor 61 (e.g., operation time T1 of the electric motor 61) as the first operation information, and manages the physical quantity indicating the operation state including the charging and discharging of the battery 53 (e.g., operation time T2 = charging time + discharging time) as the second operation information. In this case, the output unit 90 outputs the first operation information so that the operator and others (e.g., an operator, a surrounding worker, a manager of the system, or the like) can, based on the output first operation information, perform maintenance (maintenance and inspection) of the hydraulic system 70 (e.g., hydraulic pump 71) at an appropriate timing. In addition, the output unit 90 outputs the second operation information, so that the operator and others can, based on the second operation information, perform maintenance of the battery 53 at an appropriate timing in consideration of not only deterioration during discharging of the battery 53 but also deterioration of the battery 53 during charging, that is, at an appropriate timing independent of the timing of the maintenance of the hydraulic system 70, and can also replace the battery 53 as necessary.

In particular, the physical quantity indicating the operation state of the electric motor 61 includes the operation time T1 of the electric motor 61. Since the hydraulic pump 71 is driven by the electric motor 61, the operation time of the hydraulic system 70, including the hydraulic pump 71, is considered to be substantially the same as the operation time of the electric motor 61. Therefore, since the ECU 80 manages the operation time T1 of the electric motor 61 as the first operation information, when the output unit 90 outputs the first operation information, the operator and others can perform maintenance of the hydraulic system 70 at an appropriate timing based on the first operation information, that is, the operation time of the electric motor 61.

The physical quantity indicating the operation state of the battery 53 includes a sum of the charging time and the discharging time of the battery 53. In this case, when the output unit 90 outputs the second operation information, the operator and others can perform maintenance of the battery 53 at an appropriate timing based on the sum of the charging time and the discharging time of the battery 53. In other words, the maintenance of the battery 53 can be performed at an appropriate timing in consideration of not only deterioration of the battery 53 during discharging but also deterioration of the battery 53 during charging.

The physical quantity indicating the operation state of the battery 53 is not limited to the sum of the charging time and the discharging time of the battery 53 as described above. For example, the sum of the total charge amount (absolute value) obtained by integrating the charge amount of the battery 53 in a predetermined period for each of the above predetermined periods, and the total discharge amount (absolute value) obtained by integrating the discharge amount of the battery 53 in a predetermined period for each of the above predetermined periods, may be treated as a physical quantity indicating the operation state of the battery 53. Even in this case, when the output unit 90 outputs the second operation information, the operator and others can, based on the output second operation information, that is, the sum of the total charge amount and the total discharge amount of the battery 53, perform maintenance of the battery 53 at an appropriate timing in consideration of not only the deterioration due to discharge of the battery 53 but also the deterioration due to charge thereof.

In the present embodiment, the output unit 90 includes the display unit 91 that displays the first operation information and the second operation information. As a result, for example, the operator can easily determine the timing to perform maintenance of the hydraulic system 70 by viewing the first operation information (e.g., operation time T1) displayed on the display unit 91, and can easily determine the timing to perform maintenance of the battery 53 by viewing the second operation information (e.g., operation time T2) displayed on the display unit 91.

In addition, the output unit 90 includes the communication unit 92. In this configuration, the ECU 80 can output the first operation information and the second operation information to an external terminal via the communication unit 92, so that the manager of the system handling the above terminal can recognize the first operation information and the second operation information. As a result, the manager can appropriately manage the timing of the maintenance of the hydraulic system 70 based on the first operation information, and furthermore, can appropriately manage the timing of the maintenance of the battery 53 in consideration of the deterioration due to discharge and charge thereof based on the second operation information.

Incidentally, the ECU 80 may determine whether or not at least one of the physical quantity managed as the first operation information and the physical quantity managed as the second operation information reaches a specified value, and when the specified value is reached, the ECU 80 may cause the display unit 91 to display that the specified value is reached. For example, FIG. 4 illustrates another example of the display in display unit 91. In this figure, an example is illustrated in which when the operation time T1 of the electric motor 61 reaches a first specified value (e.g., 600H), the operation time T1 is displayed in a blinking manner on the display unit 91 to notify that the operation time T1 reaches the first specified value. Also in the same figure, when the operation time T2 of the battery 53 reaches a second specified value (e.g., 1000 H), the operation time T2 is displayed in a blinking manner on the display unit 91 to notify that the operation time T2 reaches the second specified value.

In this way, the ECU 80 controls the display of the display unit 91, so that the operator can immediately know, by viewing the display unit 91, that the physical quantity managed as the first operation information or the second operation information reaches the specified value, and can easily recognize the time when maintenance is necessary for at least one of the hydraulic system 70 and the battery 53. Thus, the operator can promptly perform appropriate maintenance such as inspection of the hydraulic pump 71 and replacement of the battery 53.

FIG. 4 illustrates an example in which the operation time T1 and the operation time T2 of the electric motor 61 reach the respective specified values (the first specified value and the second specified value) at the same time, but not necessarily at the same time. In other words, when at least one of the operation time T1 and the operation time T2 reaches the specified value, the ECU 80 may notify that the specified value is reached by displaying the operation time that reaches the specified value in a blinking manner on the display unit 91.

Incidentally, it is desirable that the ECU 80 manages, as the first operation information, a physical quantity indicating the operation state of the electric motor 61 in a state where the rotational speed of the electric motor 61 detected by the rotational speed detection sensor 61a exceeds a predetermined value (e.g., 10 rotations/min). In this case, the ECU 80 displays the time during which the electric motor 61 operates in a state where the rotational speed of the electric motor 61 exceeding the predetermined value as the operation time T1 of the electric motor 61 on the display screen of display unit 91 shown in FIGS. 3 and 4.

The ECU 80 manages the first operation information as described above, so that, for example, the operation time in a state where the electric motor 61 is rotating at a rotational speed equal to or less than the predetermined value (e.g., an ultra-low speed) and is not considered to be substantially operating can be excluded from the first operation information of the electric motor 61, and the operation time in a state where the electric motor 61 is considered to be rotating substantially at a rotational speed exceeding the predetermined value can be managed as the first operation information. Thus, it is possible to improve the management accuracy of the maintenance timing of the electric motor 61 based on the first operation information.

### [3. Method of Obtaining Physical Quantity Indicating Operation State of Battery]

The drive modes of the hydraulic excavator 1 of the present embodiment include a charging mode and a battery mode. The charging mode is an operating mode in which the battery 53 is charged by the charger 62. On the other hand, the battery mode is an operating mode in which the electric motor 61 is driven by the electric power of the battery 53.

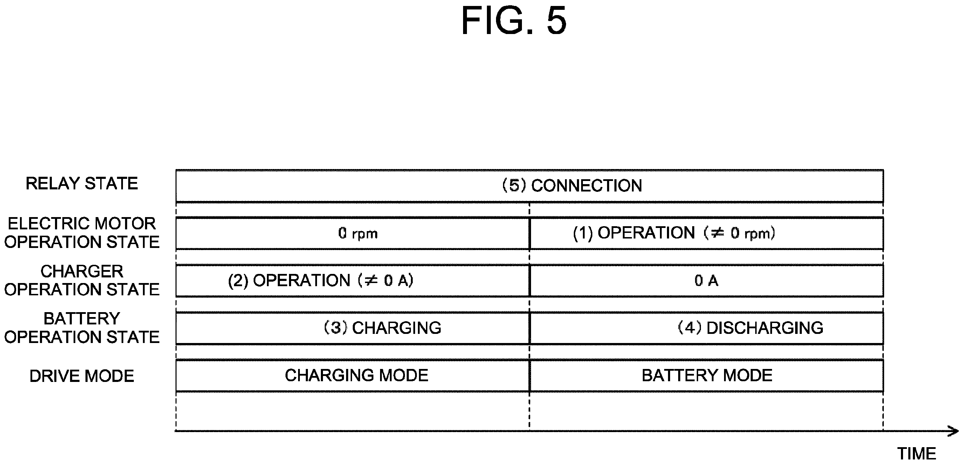

FIG. 5 schematically illustrates an example of the state (connection state/disconnection state) of the relay 64, the operation state of the electric motor 61, the operation state of the charger 62, and the operation state of the battery 53 in each of the charging mode and the battery mode. When the hydraulic excavator 1 is driven in two drive modes of the charging mode and the battery mode, the battery 53 is charged by the operation of the charger 62 in the charging mode, and thus an operation time (2) of the charger 62 is the same as a charging time (3) of the battery 53. On the other hand, in the battery mode, the battery 53 is discharged by the operation of the electric motor 61, and thus an operation time (1) of the electric motor 61 is the same as a discharging time (4) of the battery 53. Therefore, the sum of the charging time (3) and the discharging time (4) of the battery 53 is equal to the sum of the operation time (2) of the charger 62 and the operation time (1) of the electric motor 61. In other words, the physical quantity indicating the operation state including the charging and discharging of the battery 53 (charging time (3) of battery 53 + discharging time (4) of battery 53) is the sum of the operation time (2) of the charger 62 and the operation time (1) of the electric motor 61.

Therefore, when the hydraulic excavator 1 is driven in the charging mode or the battery mode as described above, the ECU 80 can easily obtain and manage the physical quantity indicating the operation state of the battery 53 (charging time (3) + discharging time (4)) by managing the sum of the operation time (2) of the charger 62 and the operation time (1) of the electric motor 61.

### [4. Other Methods of Obtaining Physical Quantity Indicating Operation State of Battery]

The drive mode of the hydraulic excavator 1 may include a combined power source mode in addition to the charging mode and the battery mode described above. The combined power source mode is a mode in which the electric motor 61 is driven by electric power supplied from at least one of the external power source 51 and the battery 53.

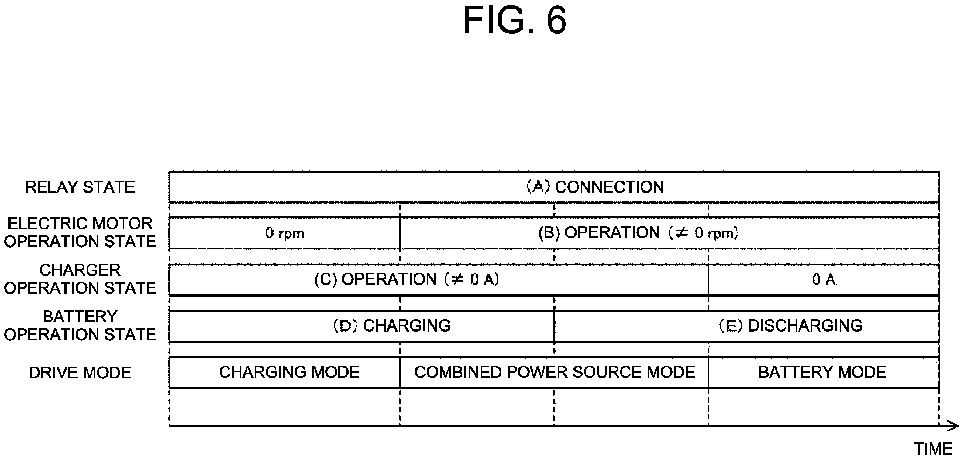

FIG. 6 schematically illustrates an example of the state (connection state/disconnection state) of the relay 64, the operation state of the electric motor 61, the operation state of the charger 62, and the operation state of the battery 53 in each of the charging mode, the battery mode, and the combined power source mode. When the hydraulic excavator 1 is driven in three drive modes of the charging mode, the battery mode, and the combined power source mode, the physical quantity indicating the operation state including the charging and discharging of the battery 53 (a charging time (D) of the battery 53 + a discharging time (E) of the battery 53) is not the sum of an operation time (C) of the charger 62 and an operation time (B) of the electric motor 61, and the same relationship as in FIG. 5 cannot be obtained.

However, the charging or discharging of the battery 53 is performed in the charging mode, the battery mode, and the combined power source mode, but both the charging and the discharging are performed in a state where the relay 64 is connected. Therefore, the sum of the charging time (D) and the discharging time (E) of the battery 53 is equal to a connection time (A) of the relay 64. In other words, the physical quantity indicating the operation state including the charging and discharging of the battery 53 (the charging time (D) of the battery 53 + the discharging time (E) of the battery 53) is the connection time (A) of the relay 64.

Therefore, when the hydraulic excavator 1 is driven in the charging mode, the battery mode, or the combined power source mode as described above, the ECU 80 can easily obtain and manage the physical quantity indicating the operation state of the battery 53 (the charging time (D) + the discharging time (E)) by managing the connection time (A) of the relay 64.

The relationship in which the charging time (D) + the discharging time (E) of the battery 53 is equal to the connection time (A) of the relay 64 can also be said in FIG. 5. In other words, when the hydraulic excavator 1 is driven in two drive modes of the charging mode and the battery mode, relay 64 is in the connected state in both the charging and the discharging mode, so in FIG. 5, the sum of the charging time (3) and the discharging time (4) of the battery 53 is equal to a connection time (5) of the relay 64. Therefore, the effect described above in which the ECU 80 manages the connection time of the relay 64 to easily obtain and manage the physical quantity indicating the operation state of the battery 53, can be obtained even when the hydraulic excavator 1 is driven in two drive modes (the charging mode or the battery mode), as shown in FIG. 5.

Although description has been made using the hydraulic excavator that is a construction machine as an example of an electric work machine, the work machine is not limited to the hydraulic excavator, but may be some other construction machine, such as a wheel loader or the like, and may be an agricultural machine, such as a combine harvester, a tractor, or the like.

Although the embodiment of the present invention has been described above, the scope of the invention is not limited thereto, and can be expanded or modified without deviating from the gist of the present invention.

### INDUSTRIAL APPLICABILITY

The present invention is applicable to work machines such as a construction machine and an agricultural machine, for example.

### DESCRIPTION OF REFERENCE NUMERALS

1 Hydraulic excavator (electric work machine)
51 External power source
53 Battery
61 Electric motor
62 Charger
61a Rotational speed detection sensor
64 Relay
70 Hydraulic system
71 Hydraulic pump
73 Hydraulic actuator
80 ECU (control unit)
90 Output unit
91 Display unit
E1 First electric path
E2 Second electric path
Ec Merging portion

## Claims

1. An electric work machine comprising:
a charger that charges a battery by supplying electric power from an external power source to the battery;
an electric motor that is driven by electric power supplied from the battery;
a hydraulic system that includes a hydraulic pump driven by the electric motor and a hydraulic actuator to which pressure oil is supplied by the hydraulic pump;
a control unit that manages a physical quantity indicating an operation state of the electric motor as first operation information, and manages a physical quantity indicating an operation state including charging and discharging of the battery as second operation information; and
an output unit that outputs the first operation information and the second operation information.

2. The electric work machine according to claim 1, wherein
the physical quantity indicating the operation state of the electric motor includes an operation time of the electric motor.

3. The electric work machine according to claim 1 or 2, wherein
the physical quantity indicating the operation state of the battery includes a sum of a charging time and a discharging time of the battery.

4. The electric work machine according to any one of claims 1 to 3, wherein
the output unit includes a display unit that displays the first operation information and the second operation information.

5. The electric work machine according to claim 4, wherein
the control unit determines whether or not at least one of the physical quantity managed as the first operation information and the physical quantity managed as the second operation information reaches a specified value, and when the specified value is reached, the control unit causes the display unit to display that the specified value is reached.

6. The electric work machine according to any one of claims 1 to 5, further comprising:
a rotational speed detection sensor that detects a rotational speed of the electric motor,
wherein the control unit manages, as the first operation information, the physical quantity indicating the operation state of the electric motor in a state in which the rotational speed of the electric motor detected by the rotational speed detection sensor exceeds a predetermined value.

7. The electric work machine according to any one of claims 1 to 6, wherein
a drive mode of the electric work machine includes a charging mode in which the battery is charged by the charger and a battery mode in which the electric motor is driven by the electric power of the battery, and
the physical quantity indicating the operation state including charging and discharging of the battery is a sum of an operation time of the charger and an operation time of the electric motor.

8. The electric work machine according to any one of claims 1 to 7, further comprising:
a first electric path that supplies electric power from the battery to the electric motor;
a second electric path that is connected to the charger and merges with the first electric path at a merging portion; and
a relay that is located between the merging portion and the battery in the first electric path and switches the first electric path between a connected state and a disconnected state,
wherein the physical quantity indicating the operation state including charging and discharging of the battery is a connection time of the relay.
